# EUROPEAN PATENT SPECIFICATION

(11) **EP 4 133 555 B1**
(45) Date of publication and mention of the grant of the patent: **10.06.2026**
(21) Application number: 21783896.0
(22) Date of filing: 10.04.2021
(51) Int. Cl.: H01R 9/22, B60R 16/02, H01R 4/18, H01R 11/12, B60R 16/023

(54) **AN ASSEMBLY FOR A CONTROL DEVICE**
EINE BAUGRUPPE FÜR EIN STEUERGERÄT
ENSEMBLE POUR DISPOSITIF DE COMMANDE

(30) Priority: 11.04.2020 IN 202041015752
(43) Date of publication of application: 15.02.2023
(73) Proprietor: TVS Motor Company Limited, 600006 Chennai (IN)
(72) Inventor: AMAR DEEP, Kumar, Chennai, 600 006 (IN); DIPANJAN, Mazumdar, Chennai, 600 006 (IN); RAMYA, Ganesan, Chennai, 600 006 (IN); SARAVANAN, Gangalakshmi, Chennai, 600 006 (IN)
(74) Representative: Patentanwaltskanzlei Matschnig & Forsthuber OG
(86) International application number: PCT/IN2021/050358
(87) International publication number: WO 2021/205480

(56) References cited:
- EP-B1- 2 727 772
- CN-B- 106 602 387
- JP-A- H1 154 166
- US-B1- 9 882 294
- US-B2- 10 084 248
- US-B2- 10 158 184
- US-B2- 9 166 312

## Description

### TECHNICAL FIELD

The present subject matter generally relates to an assembly for a control device.

### BACKGROUND OF THE INVENTION

Typically, most contemporary appliances or consumer goods including automobiles include a control device namely an electronic control unit. The control device is usually an embedded system that controls one or more corresponding electrical systems or subsystems in the corresponding appliances. Most appliances typically comprise a plurality of control devices and the complexity involved in establishing electrical connections for the plurality of control devices itself is very challenging. For example, it is especially challenging to ensure safety of the control device to which many power lines carrying high current are connected.

Hybrid and electric vehicles are typically provided with a plurality of control devices including at least one electronic control unit that controls one or more subsystems of the vehicle. For example, hybrid and electric vehicles typically includes a motor controller that converts DC power from the battery unit to AC power to drive a multi-phase motor unit/motor controller etc. Both DC power wires and AC power wires are required to be connected to the motor controller using couplers. Typically, the power wires are directly connected to the motor controller by using individual coupler for each power wire. However, in using individual couplers, there exists high possibility of wrong assembly with the power wires being routed to the wrong terminal during manufacturing as well as during service. Additionally, use of couplers to connect the power wires to the terminals on the controller makes them vulnerable to movement owing to vibrations, which can potentially result in power wires brushing one another, which may further result in power wires getting shorted and lead to fire hazard safety risk. Moreover, the assembly time required to route the power wires to the terminals on the motor controller is also high. Additionally, there lies a challenge of retaining the stable routing of the connections as well as the wiring during the assembly process. Typically, the control unit has a plurality of connections including incoming and outgoing signals or current. Assembly of multiple connector designs known in the art consume significant amount of time for an operator to individually fix each of the connections with added risk of mix-up which is highly undesirable especially for the power lines which are vulnerable for short circuit, major damage & fire accident. In a vehicle, especially a saddle type two wheeled vehicle, layout space is always a challenging limitation. Therefore, packaging one or more controllers to maintain a compact vehicle layout while still ensuring adequate utility space for the user becomes a contradictory requirement. Considering ease of manufacturing, one may prefer orienting the controller unit in an upward facing orientation which can enable operator to assemble the power lines as well other harness and connectors with less difficulty. However, such orientation of a controller eats away into valuable utility space making it a compromised solution. Disposing a controller unit in a vertical orientation though can minimise space requirement but can make the task of connecting the power lines / harness and couplers almost impossible. Thus, there exists a need for an improved solution for connecting harness and couplers to a controller overcoming all problems cited above as well as other problems of known art.

Therefore, there is a need for providing an alternate means for establishing electrical connections of an electronic device used in various appliances, while ensuring safety of the appliances, ease of assembly as well as enabling packaging in a compact layout. Moreover, there is also a need to ensure ease of access of the power wires to be connected to the electronic device, so that the overall time required for establishing electrical connections of the electronic device with the corresponding electrical components is reduced, and the overall productivity of manufacturing the various appliances is improved.

JPH1154166A, US10084248B2, US9882294B1, US10158184B2 and US9166312B2 also disclose assemblies for general devices.

### BRIEF DESCRIPTION OF THE DRAWINGS

The detailed description described with reference to the accompanying figures. The same numbers have been used throughout the drawings to reference like features and components.
**Fig.1** is a top view of a connector unit depicting parts of the connector device in accordance with an embodiment of the present subject matter.
**Fig.2** is a perspective exploded view of the connector unit installation of a connector guide cum cover member to the connector unit in accordance with an embodiment of the present subject matter.
**Fig.3** is an exploded view depicting the assembly of power wires and the connector guide cum cover member to the connector unit during transit of the connector member in accordance with an embodiment of the present subject matter.
**Fig.4** is a left perspective view of a two-wheeled vehicle including the connector unit in accordance with a first embodiment of the present subject matter.
**Fig.5** is an exploded view depicting the configuration of the power wires and the connector guide cum cover member with respect to the connector unit, before assembly of the connector unit to a control device in accordance with an embodiment of the present subject matter.

### DETAILED DESCRIPTION OF THE INVENTION

One or more control devices are typically provided in majority of the contemporary appliances/ products including automobiles for controlling one or more systems or sub systems of the corresponding appliance/product. Hybrid and electric vehicles are typically provided with a plurality of control devices including at least one electronic control unit that controls one or more subsystems of the vehicle. For example, the hybrid and electric vehicles typically include a motor controller that converts DC power from the battery unit to AC power to drive a multi-phase motor unit. The motor control unit receives a plurality of power lines including AC and DC power lines that get connected to corresponding terminals on the motor control unit via standard couplers. Most often, each AC and DC power line is connected via an individual coupler. Thus, a plurality of couplers are used to connect the plurality of power lines to the motor control unit. However, while use of couplers aids in coupling the power lines to the motor control unit, it does not aid in preventing movement of power lines due to vehicle vibration. Movement of power lines due to vehicle vibration, shock loads etc. results in friction between them, resulting in the power lines getting shorted. Additionally, movement of power lines also causes the couplers to get loosened, thereby resulting in arcing at the point of contact of the couplers with the power lines, putting the hybrid/electric vehicle at a safety risk. Moreover, with use of individual couplers, there exists a high possibility of wrong assembly with the power wires being routed to the wrong terminal, which gets further aggravated with more number of lines to be connected. High assembly time is also another disadvantage associated with the use of individual couplers for coupling the power lines to the motor control unit, as the workmen at the assembly line are required to individually couple each power line with a coupler for establishing electrical connection of the motor control unit with a battery unit and a motor unit. Accessing the corresponding terminals on the motor control unit for connection with the power lines becomes especially difficult when the motor control unit has been mounted vertically in the vehicle, with the corresponding terminals on the motor control unit pointing sidewards and away from the centre of the vehicle. Such configuration may be preferred to maintain a compact layout but makes the assembly extremely difficult & unviable Moreover, even once the power lines are coupled to the corresponding terminals on the motor control unit, the power lines would dangle vertically downwards from the motor control unit, subjecting the power lines to strain undesirably. Therefore, there is a need to provide an alternate configuration for establishing electrical connection of any control device with its corresponding power lines.

With the above and other objectives in view, the present subject matter provides a stand-alone connector unit for housing a plurality of power lines to be connected with a corresponding control device for establishing electrical connection of the control device with its corresponding circuit components. The connector unit comprises a connector base for holding two or more power lines, and two or more corresponding terminal slots for receiving corresponding terminal members of said two or more power lines, wherein each corresponding terminal slot receives a corresponding terminal member of each power line. As per an embodiment, the connector base is integrally extended to form the corresponding terminal slots. Particularly, the corresponding terminal slots are formed in a manner such that each terminal slot is at a predefined distance from the neighboring terminal slot, so that each power line of the two or more power lines is held at a predefined distance from the neighboring power line. Thus, it is ensured that all power lines to be connected to the control device are held away from one another. Further, in order to prevent movement of each of said two or more power lines, the connector unit comprises a plurality of holder arms, wherein a pair of holder arms each of the plurality of holder arms extends on either side of each terminal slot of the two or more corresponding terminal slots. When each power line of the two or more power lines connected to a terminal member each is located in each terminal slot of the two or more corresponding terminal slots, a pair of crimped terminal arms formed in each terminal member attached to each power line is pressed against each pair of holder arms. Thus, each power line is secured in each corresponding terminal slot of the two or more corresponding terminal slots of the connector unit and is prevented from moving even due to vehicle vibration. The connector unit holding the two or more power lines is directly assembled over the control device, without having to individually couple each power line to the corresponding terminals of the control device. Therefore, assembly time required for connecting power lines to the control device is significantly reduced. As per an aspect of the present invention, the connector unit is used to pre-configure all the connecting power lines in their desired position as a sub-assembly before it is being assembled on the vehicle or the product. This greatly enhances the degree of freedom with which the operator can accomplish the assembly of the power lines in a pseudo sub-station in any desired & comfortable orientation irrespective of the final orientation of the assembly on the vehicle.

As per an aspect of the present subject matter, each power line of the two or more power lines emerging from a wiring harness and to be housed in the connector unit is configured to have a length different than the others, so that each power line together with its terminal member can only be located in its corresponding terminal slot and in no other terminal slot. Thus, it is ensured that no power line can be wrongly assembled on the connector unit.

As per another aspect of the present subject matter, the connector unit is provided with a connector guide cum cover member, wherein on one surface of the connector guide cum cover member, a plurality of ribs is formed. In order to ensure that the two or more power lines are held in their respective terminal slots, before the final assembly of the connector unit is assembled over the control device, the connector unit as a stand-alone assembly is pre-locked with the connector guide cum cover member on its bottom side, with the two or more corresponding terminal slots holding the corresponding terminal members of the two or more power lines getting located over the plurality of ribs formed in connector guide cum cover member. Provision of connector guide cum cover member in the bottom side of the connector unit ensures that the two or more power lines to be connected to the control device remain in their positions even during transit of the connector unit in the/ to the assembly line from a separate sub-assembly station. Further, when the connector unit holding the two or more power lines is about to be assembled over the control device, the connector guide cum cover member is unlocked from the bottom side of the connector unit. In addition, once the connector unit is assembled, the connector guide cum cover member is inverted or flipped with its second surface facing a top surface of the connector unit and is locked against the top surface of the connector unit. Thus the guide performs the dual function of being a guide during sub-assembly & a cover after being assembled on the vehicle. The connector guide when functioning as a cover member on the top surface of the connector unit helps prevent entry of dust and water into the corresponding terminal members of the two or more power lines. Thus, the connector guide cum cover member serves as a guide when the same is locked against the bottom side of the connector unit and as a cover when the same is locked against the top surface of the connector unit.

Thus, the design and construction of the connector unit as per the present subject matter ensures that the electrical connections of power line to any control device can be safely made without compromising on ease of establishing the electrical connections. Eliminating the use of individual couplers to connect the power lines to the control device ensures ease of assembly and ease of establishing electrical connections for the control device. As a result, assembly time involved in establishing electrical connections for the control device is also minimised.

Various other features and advantages of the invention are described in detail below with reference to the accompanying drawings. In the drawings, like reference numbers generally indicate identical, functionally similar, and/or structurally similar elements.

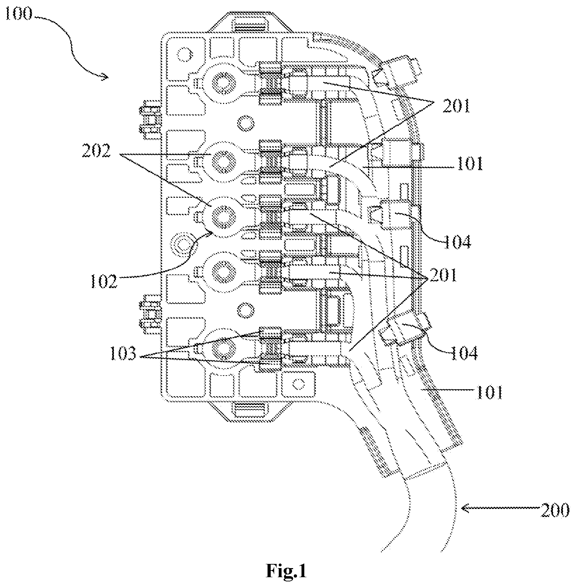

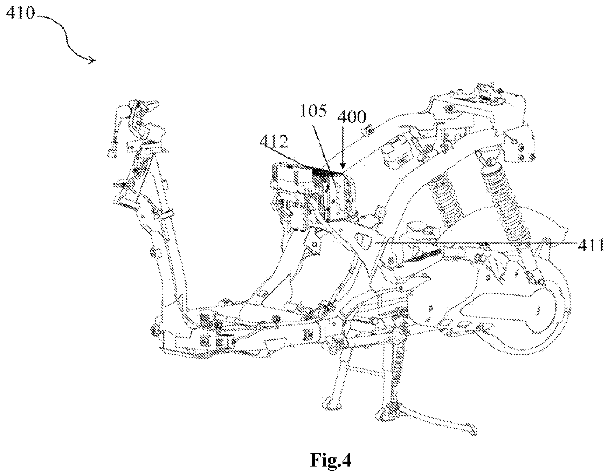

**Fig.1** is a top view of the connector unit **100** as per an embodiment of the present subject matter. As per an aspect of the present subject matter, and as may be seen in **Fig.1****,** the connector unit **100** comprises a connector base **101** for holding two or more power lines **201** emerging from a wiring harness **200.** In other words, the connector unit **100** is configured to house or accommodate at least a portion of the wiring harness including two or more power lines 201 to be electrically connected to a control device **400** (shown in **Fig.4**). In the present embodiment, the control device **400** is a motor control unit. The control device **400** as per the present embodiment receives five power lines for establishing electrical connection with a battery unit (not shown) and a motor unit (not shown). Particularly, as per the present embodiment, the control device **400** receives two power lines comprising positive and negative wires from the battery unit and three output power lines for powering the motor unit. Thus, in the present embodiment, five power lines are to be connected to the control device. As may be seen, each power line of the two or more power lines **201** is connected with a corresponding terminal member **202** each. In the present embodiment, each corresponding terminal member **202** of each power line **201** is a ring shaped. Alternatively, the profile o the terminal member can be of different geometry.

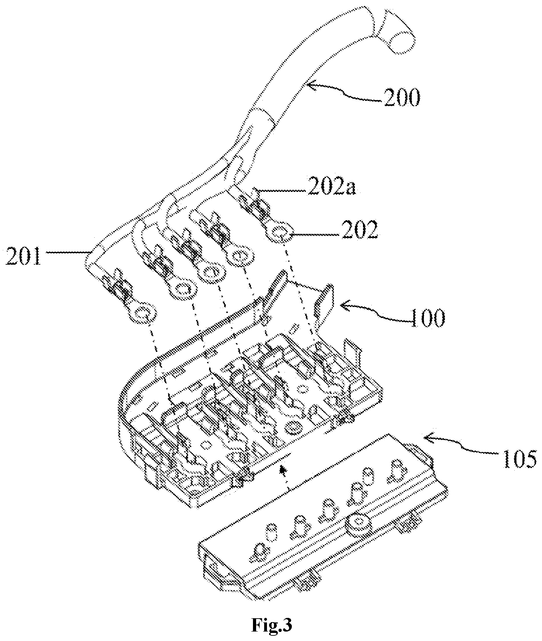

In order to house or accommodate each corresponding terminal member **202** fitted to each power line **201,** the connector unit **100** comprises corresponding terminal slots **102,** wherein each corresponding terminal slot **102** receives a corresponding terminal member **202** of each power line, and wherein the geometrical profile of the corresponding terminal slots **102** conforms to the profile of the terminal member. Particularly, as per an embodiment, the connector base **101** of connector unit **100** is integrally extended to form the two or more corresponding terminal slots **102.** Particularly, said corresponding terminal slots **102** are formed in a manner such that each terminal slot **102** is at a predefined distance from the neighboring terminal slot **102,** so that each power line of the two or more power lines **201** is held at a predefined distance from the neighboring power line. Further, in an additional embodiment and as may be seen, the connector unit **100** integrally includes a plurality of holder arms **103,** wherein a pair of holder arms each of the plurality of holder arms **103** extends on either side of each terminal slot of the two or more corresponding terminal slots **102.** When each power line of the two or more power lines **201** connected to a terminal member each is located in each terminal slot of the two or more corresponding terminal slots **102,** a pair of crimped terminal arms **202a** (shown in **Fig.3**) formed in each terminal member attached to each power line is pressed against each pair of holder arms. Thus, each power line is secured in each corresponding terminal slot of the two or more corresponding terminal slots **102** of the connector unit **100** and is prevented from moving even due to vehicle vibration. Further, in an additional embodiment a plurality of cable ties **104** are provided along a peripheral length of the connector base **101** on one side, with at least one cable tie securing each power line of the two or more power lines **201.** Provision of the plurality of cable ties **104** also helps in preventing movement of the power lines. Further, in order to additionally ensure that two or more power lines **201** do not get damaged even during transit, the connector unit **100** is locked with a connector guide cum cover member **105** as per an embodiment of the present subject matter. The additional embodiments of incorporating an additional cable tie and / or the holder arms may be more beneficially implemented when the orientation of the assembly is at an angle to the ground making it more secure thereby achieving the purpose of a secure, reliable & safe electrical connections with ease of assembly.

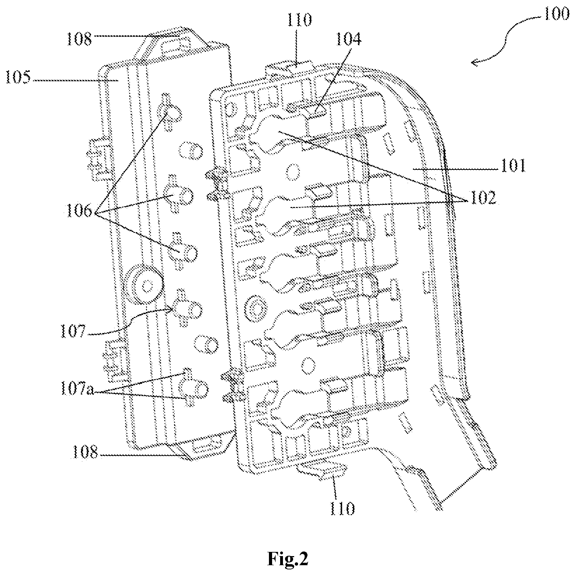

**Fig.2** illustrates an exploded perspective view depicting the connector unit and the connector guide cum cover member in accordance with an embodiment of the present subject matter. As may be seen, the connector guide cum cover member **105** includes a plurality of ribs **106** formed along a length of one surface of the connector guide cum cover member **105.** Additionally, the connector guide cum cover member **105** integrally includes a plurality of guides **107,** wherein a guide each is formed at a base of each rib of the plurality of ribs **106,** and wherein a portion of each guide extends laterally outwards in the form of arms **107a** from each rib of said plurality of ribs **106.** While the guides **107** ensure precise location of the connectors in a sub-assembly station, the arms **107a** are of a height dimension smaller that the height of the guide **107** thereby enabling offset disposition of the connectors on the connector unit since the connector are typically flat with low thickness as against the power lines which are circular with higher thickness. This ensure that the connector is held in their nominal position offset from any of the circumferentially contacting surfaces of the power lines & additionally ease the removal of the guide member from the connectors to be able to flip it as a cover member. Without the arms **107a** the connectors can get stuck onto the guides making it difficult for the operator to swiftly flip the guide cum cover member from one side to other. The guide cum cover member in an additional embodiment is configured with additional ribs to couple with locking opening on the connecter unit when it has been flipped to function as a cover. As per an additional embodiment, the additional ribs on the guide cum cover member are also configured with arms similar to the arms on the guide **107a** which help in maintaining an offset abutting contact between the cover & the connector unit. Further, the connector guide cum cover member **105** includes two or more locking arms **108** formed along its peripheral edges for locking with corresponding locking lugs **110** formed along corresponding peripheral edges of the connector base **101.**

**Fig.3** illustrates an exploded perspective view to depict the direction of assembly of the connector guide cum cover with the connector unit. During transit of the wiring harness **200** comprising two or more power lines **201** to be connected to the control device **500,** the two or more power lines **201** are housed in the connector unit **100** by being disposed in the two or more corresponding terminal slots **102.** In order to ensure that there is no damage to the corresponding terminal members of each power line of the two or more power lines **201,** the connector unit **100** is locked with the connector guide cum cover member **105** on its bottom side. Particularly, during assembly the surface of the connector guide cum cover member **105,** containing the plurality of ribs **106,** faces the bottom side of the connector unit **100.** Provision of the connector guide cum cover member **105** on the bottom side of the connector unit **100** allows the corresponding terminal member of each power line to be located on each rib of the plurality of ribs **106** and be completely covered on its rear side. Additionally, presence of the plurality of guides **107** including the arms **107a** extending from each rib of the plurality of ribs **106** ensures that the corresponding terminal member **202** of each power line does not get entangled at the base of each rib and instead rests on the arms **107a** extending on either side of each rib. As a result, when the connector unit **100** is unlocked from the connector guide cum cover member **105** after transit for connection of the two or more power lines **201** with the control device **400** (shown in **Fig.4**), the two or more power lines **201** along with their corresponding terminal members **202** can be easily disassembled from the plurality of ribs **106** formed on the connector guide cum cover member **105** without undergoing any damage.

Once the connector guide cum cover member **105** is dismantled from the connector unit **100,** the connector unit **100** along with the two or more power lines **201** secured therein is carried to the control device **400.** In other words, the wiring harness **200** including the two or more power lines **201** secured in the connector unit **100** and for connection with the control device **400** is carried to the control device **400.** For example, **Fig.4** illustrates a frame structure **410** of a two-wheeled saddle-type vehicle provided with a control device **400.** In the present embodiment, the control device **400** is a motor control unit that controls the power supplied to a motor unit (not shown) from a battery unit **412.** Further, in the present embodiment, the control device **400** is supported on a cross member **411** of the frame structure **410** and is disposed vertically besides the battery unit **412.** Particularly, the corresponding terminals (not shown) of the control device **400** for connection with the two or more power lines **201** of the wiring harness **200** which in turn is also connected to the battery unit **412** and the motor unit (not shown) face towards a front region of the frame structure **410.** The wiring harness **200** comprising the connector unit **100** is assembled on the control device **400** by connecting the two or more power lines **201** of the wiring harness **200** and secured in the connector unit **100** to the corresponding terminals (not shown) of the control device **400.** In the present embodiment, the wiring harness **200** comprises five power lines to be connected to the corresponding terminals of the control device **400,** out of which two power lines are connected as output from the battery unit **412** and three power lines are connected as input to the motor control unit **400.** Particularly, in the present embodiment, the two or more power lines **201** are connected to the corresponding terminals of the control device by fastening the two or more corresponding terminal members **202** of the two or more power lines **201** with the corresponding terminals of the control device **400.** Thus, the connector unit **100** that houses the two or more power lines **201** to be connected to the control device **400** is directly assembled over the control device **400.** Therefore, the steps of accessing the power lines to be connected to the control device and that of routing the power lines etc. are eliminated and assembly time is considerably reduced. Moreover, ease of assembly is also ensured.

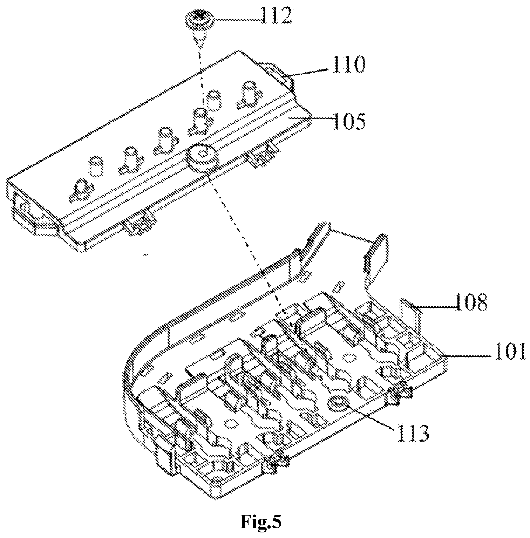

Once the two or more power lines **201** secured in the connector unit **100** are fastened to the corresponding terminals of the control device **400,** the connector guide cum cover member **105** is located over the top surface of the connector unit **100** (see **Fig.5**), over the two or more power lines **201** secured therein. Particularly, while locating the connector guide cum cover **105** over the connector unit **100** which has been assembled over the control device **100,** it is ensured that the other surface of the connector guide cum cover member **105** without the plurality of ribs **106** faces the outside towards a front portion of the frame structure **410.** Once the other surface of the connector guide cum cover member **105** is placed over the top surface of the connector unit **100,** the connector guide cum cover member **105** is pressed to be locked with the connector unit **100.** Further, in the present embodiment a fastener **112** is also used to fasten the connector guide cum cover member **105** to the connector unit **100.** A corresponding mounting hole **113** is formed in the connector unit **100** for receiving the fastener **112.** Thus, in the assembled condition of the connector unit **100** over the control device **400,** the guide cum cover member **105** serves as a protective cover for each corresponding terminal member of the two or more corresponding terminal members **202** of the two or more power lines **201.** The guide cum cover member **105** helps prevent water and dust from entering into or directly splashing onto the two or more corresponding terminal members **202.**

As can be made out from the teachings of the present subject matter, the configuration of the connector unit and the wiring harness comprising the connector unit is unique, wherein the connector unit housing different power lines can be directly used to establish electrical connection with any control device without the need for making individual connections. The teachings of the present subject matter offer a reliable solution for ensuring ease of establishing electrical connections for the control device without compromising on safety of the control device and that of the appliance/product employing the control device.

## Claims

1. An assembly for a control device (400), comprising:
a connector guide cum cover member (105) comprising a plurality of ribs (106) formed along a length of one surface thereof, and two or more locking arms (108) formed along its peripheral edges for locking with corresponding locking lugs (110) formed along corresponding peripheral edges of a portion of a connector unit (100); and
the assembly further comprising said connector unit (100) provided with said connector guide cum cover member (105), and,
a wiring harness (200) guided by the connector unit (100) and comprising two or more power lines (201),
wherein said connector unit (100) includes:
a connector base (101) for holding the two or more power lines (201) emerging from the wiring harness (200), wherein said two or more power lines (201) are connectable to said control device (400); and
two or more corresponding terminal slots (102) integrally extended from said connector base (101) for receiving corresponding terminal members (202) of said two or more power lines (201), wherein each of said two or more corresponding terminal slots (102) receives a corresponding terminal member (202) of each power line of said two or more power lines (201),
wherein said two or more power lines (201) are housed in said connector unit (100), in order to be directly coupled to corresponding terminals on said control device (400).

2. The assembly as claimed in claim 1, wherein each terminal slot of said two or more corresponding terminal slots (102) are formed at a predefined distance from a neighbouring terminal slot of said two or more corresponding terminal slots (102).

3. The assembly as claimed in claim 1, wherein said connector unit (100) comprises a plurality of holder arms (103), each of a pair of holder arms of said plurality of holder arms (103) extending on either side of each terminal slot of said two or more corresponding terminal slots (102).

4. The assembly as claimed in claim 3, wherein each pair of holder arms of the plurality of holder arms (103) is configured to be pressed against a pair of crimped terminal arms (202a), each of said pair of crimped terminal arms (202a) being formed in a corresponding terminal member (202) attached to a power line of said two or more power lines (201).

5. The assembly as claimed in claim 4, wherein said corresponding terminal members (202) attached to said two or more power lines (201) are ring shaped.

6. The assembly as claimed in claim 1, wherein said connector base (101) is configured to hold a plurality of cable ties (104) along a peripheral length of said connector base (101) on one side, at least one cable tie of said plurality of cable ties (104) securing a power line of said two or more power lines (201) on said connector base (101).

7. The assembly as claimed in claim 1, wherein said connector base (101) is formed with corresponding locking lugs (110) along peripheral edges of said connector unit (100) for locking with corresponding locking arms (108) formed along corresponding peripheral edges of said connector guide cum cover member (105).

8. The assembly as claimed in claim 7, wherein said connector guide cum cover member (105) is configured to be locked against one of a bottom side and a top side of said connector unit (100).

9. The assembly as claimed in claim 7, wherein said connector guide cum cover member (105) integrally includes a plurality of ribs (106) formed on one of one or more surfaces of said connector guide cum cover member (105); and
wherein said plurality of ribs (106) enable location of corresponding terminal members (202) of each power line of said two or more power lines (201) of a wiring harness (200), when said guide cum cover member (105) being assembled on one side of said connector unit (100).

10. The assembly as claimed in claim 1, wherein said control device (400) is disposed vertically on a cross member (411) of a frame structure (410) of a two-wheeled saddle-type vehicle.

11. The assembly as claimed in claim 1, wherein a wiring harness (200) for said control device (400) is housed in said connector unit (100), wherein said wiring harness (200) includes two or more power lines (201) to be connected to corresponding terminals of said control device (400), said two or more power lines (201) being secured in said connector unit (100) and being directly coupled to said corresponding terminals on said control device (400).

12. The assembly as claimed in claim 11, wherein said guide cum cover member (105) is configured to be locked against one of a bottom side and a top side of said connector unit (100).

13. The assembly as claimed in claim 11, wherein each rib of said plurality of ribs (106) supports a terminal member (203), and each power line of said two or more power lines (201) being secured in said connector unit (100).

14. The assembly as claimed in claim 11, wherein each rib of said plurality of ribs (106) includes a base formed as a guide (107), wherein each guide (107) includes a portion that extends laterally outwards in form of arms (107a).

15. A two-wheeled saddle type vehicle comprising:
a frame structure (410) configured to support a battery unit (412);
a motor unit;
a control device (400) including a motor control unit; and
an assembly according to any one of the previous claims.

## Patentansprüche

1. Anordnung für eine Steuervorrichtung (400), aufweisend:
ein Anschlussführungs-Abdeck-Element (105) mit einer Vielzahl von Rippen (106), die entlang einer Länge einer seiner Oberflächen ausgebildet sind, und zwei oder mehr Rastklinken (108), die entlang seiner Randkanten ausgebildet sind, zur Verriegelung mit korrespondierenden Rastzungen (110), die entlang korrespondierender Randkanten eines Bereiches einer Verbindereinheit (100) ausgebildet sind, und wobei die Anordnung zudem die mit dem Anschlussführungs-Abdeck-Element (105) ausgestattete Verbindereinheit (100) aufweist,
und
einen Kabelbaum (200), der von der Verbindereinheit (100) geführt ist und zwei oder mehr Energieversorgungsleitungen aufweist;
wobei die Verbindereinheit (100) aufweist:
eine Anschlussstückbasis (101) zum Halten der zwei oder mehr Energieversorgungsleitungen (201), die aus dem Kabelbaum (200) herausragen, wobei die zwei oder mehr Energieversorgungsleitungen (201) mit der Steuervorrichtung (400) verbindbar sind, und
zwei oder mehr korrespondierende Klemmenaufnahmen (102), die sich integriert von der Anschlussstückbasis (101) für die Aufnahme korrespondierender Klemmschuhe (202) der zwei oder mehr Energieversorgungsleitungen (201) erstrecken, wobei jede der zwei oder mehr korrespondierenden Klemmenaufnahmen (102) einen korrespondierenden Klemmschuh (202) jeweils der zwei oder mehr Energieversorgungsleitungen (201) aufnimmt;
wobei die zwei oder mehr Energieversorgungsleitungen (201) in der Verbindereinheit (100) untergebracht sind, um direkt mit korrespondierenden Anschlüssen auf der Steuervorrichtung (400) gekoppelt zu werden.

2. Anordnung nach Anspruch 1, wobei jede der zwei oder mehr korrespondierenden Klemmenaufnahmen (102) in einem vordefinierten Abstand zu einer benachbarten Klemmenaufnahme der zwei oder mehr korrespondierenden Klemmenaufnahmen (102) ausgebildet ist.

3. Anordnung nach Anspruch 1, wobei die Verbindereinheit (100) eine Vielzahl von Halterarmen (103) aufweist, wobei sich jeweils ein Paar Halterarme aus der Vielzahl von Halterarmen (103) beiderseits je einer Klemmenaufnahme der zwei oder mehr korrespondierenden Klemmenaufnahmen (102) erstreckt.

4. Anordnung nach Anspruch 3, wobei jedes Paar von Halterarmen aus der Vielzahl von Halterarmen (103) gegen ein Paar von gecrimpten Anschlussarmen (202a) andrückbar gestaltet ist, wobei jeder der beiden gecrimpten Anschlussarme (202a) in einem korrespondierenden Klemmschuh (202) ausgebildet ist, der an einer der zwei oder mehr Energieversorgungsleitungen (201) angebracht ist.

5. Anordnung nach Anspruch 4, wobei die an den zwei oder mehr Energieversorgungsleitungen (201) angebrachten korrespondierenden Klemmschuhe (202) ringförmig sind.

6. Anordnung nach Anspruch 1, wobei die Anschlussstückbasis (101) dazu eingerichtet ist, eine Vielzahl von Kabelhaltern (104) entlang einer Randlänge der Anschlussstückbasis (101) auf einer Seite zu halten, wobei zumindest einer aus der Vielzahl von Kabelhaltern (104) eine der zwei oder mehr Energieversorgungsleitungen (201) an der Anschlussstückbasis (101) sichert.

7. Anordnung nach Anspruch 1, wobei die Anschlussstückbasis (101) mit korrespondierenden Rastzungen (110) entlang Randkanten der Verbindereinheit (100) ausgebildet ist, zur Verriegelung mit korrespondierenden Rastklinken (108), die entlang korrespondierender Randkanten des Anschlussführungs-Abdeck-Elements (105) ausgebildet sind.

8. Anordnung nach Anspruch 7, wobei das Anschlussführungs-Abdeck-Element (105) an einer Unterseite oder Oberseite der Verbindereinheit (100) verriegelbar ist.

9. Anordnung nach Anspruch 7, wobei das Anschlussführungs-Abdeck-Element (105) eine Vielzahl von Rippen (106) integriert beinhaltet, die an einer von einer oder mehreren Oberflächen des Anschlussführungs-Abdeck-Elements (105) ausgebildet sind; und
wobei die Vielzahl von Rippen (106) die Positionierung korrespondierender Klemmschuhe (202) jeder der zwei oder mehr Energieversorgungsleitungen (201) eines Kabelbaums (200) ermöglichen, wenn das Anschlussführungs-Abdeck-Element (105) auf einer Seite der Verbindereinheit (100) montiert ist.

10. Anordnung nach Anspruch 1, wobei die Steuervorrichtung (400) an einem Querträger (411) einer Rahmenstruktur (410) eines zweirädrigen Fahrzeugs mit Sattel vertikal angeordnet ist.

11. Anordnung nach Anspruch 1, wobei ein Kabelbaum (200) für die Steuervorrichtung (400) in der Verbindereinheit (100) untergebracht ist, wobei der Kabelbaum (200) zwei oder mehr Energieversorgungsleitungen (201) beinhaltet, die mit korrespondierenden Anschlüssen der Steuervorrichtung (400) zu verbinden sind,
wobei die zwei oder mehr Energieversorgungsleitungen (201) in der Verbindereinheit (100) befestigt sind und direkt mit den korrespondierenden Anschlüssen auf der Steuervorrichtung (400) verbunden sind.

12. Anordnung nach Anspruch 11, wobei das Anschlussführungs-Abdeck-Element (105) an einer Unterseite oder Oberseite der Verbindereinheit (100) verriegelbar ist.

13. Anordnung nach Anspruch 11, wobei jede der Vielzahl von Rippen (106) einen Klemmschuh (203) hält und jede der zwei oder mehr Energieversorgungsleitungen (201) in der Verbindereinheit (100) befestigt ist.

14. Anordnung nach Anspruch 11, wobei jede der Vielzahl von Rippen (106) eine als Führung (107) ausgebildete Basis beinhaltet, wobei jede Führung (107) einen seitlich nach außen in Form von Armen (107a) verlaufenden Bereich hat.

15. Zweirädriges Fahrzeug mit Sattel, aufweisend:
eine Rahmenstruktur (410), die zum Halten einer Batterieeinheit (412) eingerichtet ist,
eine Motoreinheit,
eine Steuervorrichtung (400) mit einer Motorsteuereinheit und
eine Baugruppe gemäß einem der vorangehenden Ansprüche.

## Revendications

1. Ensemble pour un dispositif de commande (400), comportant :
un élément de guidage et recouvrement de connecteur (105) comprenant une pluralité de nervures (106) formées sur une longueur d'une de ses surfaces, et deux ou plusieurs bras de verrouillage (108) formés le long de ses bords périphériques pour s'engager avec des ergots de verrouillage correspondants (110) formés le long des bords périphériques correspondants d'une partie d'une unité de connecteur (100), et ledit ensemble comprenant en outre ladite unité de connecteur (100) munie dudit élément de guidage et recouvrement de connecteur (105),
et
un faisceau de câbles (200) guidé par l'unité de connecteur (100) et comportant deux ou plusieurs câbles d'alimentation (201) ;
ladite unité de connecteur (100) incluant :
une base de connecteur (101) destinée à tenir les deux ou plusieurs lignes d'alimentation (201) sortant du faisceau de câbles (200), lesdites deux ou plusieurs lignes d'alimentation (201) pouvant être connectées audit dispositif de commande (400), et
deux ou plusieurs fentes de borne correspondantes (102) s'étendant d'un seul tenant à partir de ladite base de connecteur (101) pour recevoir des éléments de borne correspondants (202) desdits deux ou plusieurs câbles d'alimentation (201), chacune desdites deux ou plusieurs fentes de borne correspondantes (102) recevant un élément de borne correspondant (202) de chaque câble d'alimentation parmi lesdits deux ou plusieurs câbles d'alimentation (201),
lesdites deux ou plusieurs lignes d'alimentation (201) étant logées dans ladite unité de connecteur (100), afin d'être directement couplées aux bornes correspondantes sur ledit dispositif de commande (400).

2. Ensemble selon la revendication 1, dans lequel chaque fente de borne desdites deux ou plusieurs fentes de borne correspondantes (102) est formée à une distance prédéfinie d'une fente de borne voisine parmi lesdites deux ou plusieurs fentes de borne correspondantes (102).

3. Ensemble selon la revendication 1, dans lequel ladite unité de connecteur (100) comprend une pluralité de bras de retenue (103), chaque paire de bras de retenue de ladite pluralité de bras de retenue (103) s'étendant de part et d'autre de chaque fente de borne parmi lesdites deux ou plusieurs fentes de borne correspondantes (102).

4. Ensemble selon la revendication 3, dans lequel chaque paire de bras de retenue de la pluralité de bras de retenue (103) est configurée pour être pressée contre une paire de bras de borne serties (202a), chacun desdits bras de borne serties (202a) étant formé dans un élément de borne correspondant (202) fixé à une ligne d'alimentation parmi lesdites deux ou plusieurs lignes d'alimentation (201).

5. Ensemble selon la revendication 4, dans lequel lesdits éléments de borne correspondants (202) fixés auxdites deux ou plusieurs lignes électriques (201) sont en forme d'anneau.

6. Ensemble selon la revendication 1, dans lequel ladite base de connecteur (101) est configurée pour contenir une pluralité d'attaches de câble (104) le long d'une longueur périphérique de ladite base de connecteur (101) sur un côté, au moins une attache de câble de ladite pluralité d'attaches de câble (104) fixant une ligne d'alimentation parmi lesdites deux ou plusieurs lignes d'alimentation (201) sur ladite base de connecteur (101).

7. Ensemble selon la revendication 1, dans lequel ladite base de connecteur (101) est pourvue de pattes de verrouillage correspondantes (110) le long des bords périphériques de ladite unité de connecteur (100) pour s'engager avec des bras de verrouillage correspondants (108) formés le long des bords périphériques correspondants dudit élément de guidage et recouvrement de connecteur (105).

8. Ensemble selon la revendication 7, dans lequel ledit élément de guidage et recouvrement de connecteur (105) est configuré pour être verrouillé contre une face inférieure ou supérieure de ladite unité de connecteur (100).

9. Ensemble selon la revendication 7, dans lequel ledit élément de guidage et recouvrement de connecteur (105) comprend une pluralité de nervures (106) formées d'un seul tenant sur l'une d'une ou plusieurs surfaces dudit élément de guidage et recouvrement de connecteur (105) ; et ladite pluralité de nervures (106) permet le positionnement des éléments de borne correspondants (202) de chacune des deux ou plusieurs lignes d'alimentation (201) d'un faisceau de câbles (200), lorsque ledit élément de guidage et de recouvrement de connecteur (105) est assemblé sur un côté de ladite unité de connecteur (100).

10. Ensemble selon la revendication 1, dans lequel ledit dispositif de commande (400) est disposé verticalement sur une traverse (411) d'une structure de châssis (410) d'un véhicule à deux roues de type selle.

11. Ensemble selon la revendication 1, dans lequel un faisceau de câbles (200) destiné audit dispositif de commande (400) est logé dans ladite unité de connecteur (100), ledit faisceau de câbles (200) comportant deux ou plusieurs lignes d'alimentation (201) destinées à être connectées à des bornes correspondantes dudit dispositif de commande (400),
lesdits deux ou plusieurs fils d'alimentation (201) étant fixés dans ladite unité de connecteur (100) et étant directement couplés auxdites bornes correspondantes sur ledit dispositif de commande (400).

12. Ensemble selon la revendication 11, dans lequel ledit élément de guidage et recouvrement de connecteur (105) est configuré pour être verrouillé contre une face inférieure ou supérieure de ladite unité de connecteur (100).

13. Ensemble selon la revendication 11, dans lequel chaque nervure de ladite pluralité de nervures (106) supporte un élément de borne (203) et chaque ligne d'alimentation parmi lesdites deux ou plusieurs lignes d'alimentation (201) est fixée dans ladite unité de connecteur (100).

14. Ensemble selon la revendication 11, dans lequel chaque nervure de ladite pluralité de nervures (106) inclut une base formée en tant que guide (107), chaque guide (107) incluant une partie qui s'étend latéralement vers l'extérieur sous la forme de bras (107a).

15. Véhicule à deux roues de type selle comportant :
une structure de châssis (410) configurée pour supporter une unité de batterie (412) ;
une unité de moteur ;
un dispositif de commande (400) incluant une unité de commande de moteur ; et
un ensemble selon l'une quelconque des revendications précédentes.
